Europäisches Patentamt

European Patent Office

Office européen des brevets

(19)

(11) Veröffentlichungsnummer: **0 059 936**

**A1**

(12) **EUROPÄISCHE PATENTANMELDUNG**

(21) Anmeldenummer: 82101650.8

(22) Anmeldetag: 03.03.82

(51) Int. Cl.³: **C 10 M 7/00**
C 10 M 3/00, F 16 F 9/30

(30) Priorität: 03.03.81 DE 3107996

(43) Veröffentlichungstag der Anmeldung:
15.09.82 Patentblatt 82/37

(84) Benannte Vertragsstaaten:
IT

(71) Anmelder: Schiedel GmbH & Co.
Lerchenstrasse 9
D-8000 München 50(DE)

(72) Erfinder: Lochner, Kaspar
Karlsburger Strasse 61
D-8000 München 82(DE)

(72) Erfinder: Schürmann, Helmut
Christian-Hergl-Strasse 6
D-8060 Dachau(DE)

(72) Erfinder: Brand, Erich, Dipl.-Ing.
Georgenstrasse 99
D-8000 München 40(DE)

(74) Vertreter: Kressin, Horst-R., Dr. et al,
Flüggenstrasse 17
D-8000 München 19(DE)

(54) **Pastenartiges Dämpfmedium, Verfahren zu seiner Herstellung und seine Verwendung.**

(57) Die Erfindung betrifft ein pastenartiges Dämpfmedium, das zur Dämpfung von mechanischen und/oder akustischen Schwingungen geeignet ist. Das pastenartige Dämpfmedium enthält als Mindestbestandteile einen feinverteilten Feststoff bzw. ein feinverteiltes Feststoffgemisch und als Flüssigphase ein Silikonöl, Polyglykol und/oder einen gesättigten, aliphatischen oder aromatischen Carbonsäureester. Bei Verwendung von Polyglykol oder eines Carbonsäureesters als Flüssigphase ist es von Vorteil, ein Mittel zur Erhöhung der Grenzflächenaktivität (Netzmittel) und feinverteilte Magnesiumsilikate, Aluminiumsilikate und/oder feinverteiltes Siliziumdioxid als Viskositätsstabilisatoren und gegebenenfalls geringe Zusätze eines Antioxidationsmittels als Mischungsbestandteil zu verwenden. Die Erfindung betrifft weiterhin ein Verfahren zur Herstellung der pastenartigen Dämpfmedien und die Verwendung der pastenartigen Dämpfmediun in den verschiedenartigsten hydraulisch wirkenden Stoß- und Schwingungsdämpfern.

-1-

Pastenartiges Dämpfmedium,
Verfahren zu seiner Herstellung
und seine Anwendung

Beschreibung

Die Erfindung betrifft ein pastenartiges Dämpfmedium zur Dämpfung mechanischer und/oder akustischer Schwingungen auf Basis einer Flüssigphase und mindestens eines feinverteilten Feststoffes.

Dämpfmedien zur Dämpfung von mechanischen Schwingungen sind bekannt. Es sind zum Beispiel Hydrauliköle als Dämpfmedien vorgeschlagen worden. Diese Öle haben den Nachteil, dass die bei Dauerbelastung auftretende Erwärmung des Dämpfmediums nicht schnell genug abgeführt wird und die Öle überhitzt werden und aufschäumen oder sich zersetzen.

Es sind auch mit Härterzusätzen versehene Silikonöle als Dämpfmedien eingesetzt worden, die bei plötzlicher Belastung aufhärten. Derartige dilatante Dämpfmedien sind jedoch wegen der begrenzten Fliessfähigkeit nur für wenige spezielle Dämpfungsvorgänge einsetzbar. Die aufhärtenden Dämpfmedien haben auch den Nachteil, dass sie keine schalldämmende Wirkung besitzen.

Aus der US-PS 3 812 937 ist ein Dämpfmittel für hydraulisch wirkende Autopralldämpfer bekannt, das aus einem niedrig viskosen Petroleumöl besteht, das bis zu 2o Gew.-% eines organophilen Amin-Montmorillonits, das durch Umsetzung von Montmorillonit mit einem aliphatischen Aminsalz hergestellt wird, und Acetonnitril enthält.

Das bekannte Hydrauliköl ist ein aufgedicktes Öl, das jedoch nicht zum Dämpfen hochfrequenter Schwingungen und für Dauerbelastungen geeignet ist, da es nicht in der Lage ist, die bei der Umwandlung der Stoss- und/oder Zugbelastungen auftretende Wärme schnell genug abzuleiten. Bei Temperaturen um 82°C tritt bereits eine Zersetzung des Petroleumöls ein, und die Viskosität des Dämpfmediums wird bereits bei Temperaturen von weniger als 82°C erheblich herabgesetzt.

Der Erfindung lag daher die Aufgabe zugrunde, ein Dämpfmedium zur Verfügung zu stellen, das aus billigen und gut zugänglichen Ausgangsmaterialien herstellbar ist, ohne daß dadurch die Temperaturstabilität der Viskosität des Dämpfmediums und damit die Fließfähigkeit des Dämpfmediums beeinträchtigt wird und wobei gleichzeitig eine höhere Lagerstabilität der Paste gewährleistet wird.

Die Aufgabe wird gelöst durch ein Dämpfmedium der eingangs angegebenen Art, das durch die Merkmale der Ansprüche 1,2 und 3 gekennzeichnet ist.

Überraschend wurde gefunden, daß das in bekannten Dämpfmedien als Feststoff verwendete Graphit durch einige ausgewählte andere Feststoffe ersetzbar ist, auch wenn diese eine andersartige Struktur und Teilchenanordnung bzw. -packung aufweisen. Der Zusatz der in den Ansprüchen 1 und 2 aufgezählten Feststoffe hat den Vorteil, daß das Dämpfmedium durch die Auswahl des jeweiligen Feststoffs (Feststoffe) genau auf den gewünschten Dämpfungsvorgang bzw. das spezielle Dämpfelement eingestellt werden kann und daß die gewünschte Lagerstabilität und die gewünschte geringe Änderung der Viskosität über die Temperatur bei den erfindungsgemäßen Pasten erreicht wird. Dies liegt offenbar an einem synergistischen Zusammenwirken der speziellen Feststoffe mit den anderen Bestandteilen des Dämpfmediums in den bestimmten Mengenverhältnissen. Der synergistische Effekt beruht eventuell darauf, daß die aufgefundenen Feststoffe eine hohe spezifische Oberfläche und damit eine hohe Oberflächenaktivität besitzen. Das erfindungsgemäße Dämpfmedium weist eine besonders gute Stabilität der Viskosität über der Temperatur und eine gute Pastenstabilität bei der Lagerung und bei der Anwendung im Dämpfer auf. Bei den erfindungsgemäßen Dämpfmedien kommt es auch bei sehr langen Lagerzeiten und auch bei hohen Druckbelastungen nicht zur Abtrennung oder Ausfällung eines Mischungsbestandteiles. Die hohe Lagerstabilität ist überraschenderweise auch bei den Dämpfmedien gegeben, die ein Gemisch aus hellen bzw. graphitfreien Feststoffen und Graphit enthalten. Offenbar tritt hier ein stabilisierender Effekt ein, der eventuell durch die gegenseitige Verzahnung der Feststoffe verursacht wird. Bei der Verarbeitung der hellen Feststoffe entstehen keine Umweltprobleme, und die Verschmutzungsgefahr ist sehr viel geringer als bei der Verwendung von Graphit als alleinigem Feststoff.

Sofern ein Silikonöl als Basismaterial für die Flüssigphase verwendet wird, beträgt die Viskosität des Silikonöls vorzugsweise wenigstens 100 bis 2000 $mm^2/s$, insbesondere 200 bis 1000 $mm^2/s$ bei 25°C. Besonders bevorzugt sind die Methyl- und/oder Methylenphenylpolysiloxane und die fluorierten Siliconöle. Bei der Verwendung von Siliconöl als Flüssigphase kann auf den Zusatz des Netzmittels und Strukturviskositätsmittels verzichtet werden. Zwischen dem Siliconöl mit geringer Oberflächenspannung und dem zugesetzten Feststoff mit hoher Oberflächenaktivität tritt offenbar ein besonderer zwischenpartikularer Effekt auf. Als Feststoffe sind hier insbesondere ZnS, $CaF_2$, Aluminiumphosphat, Aluminiumpolyphosphat und/oder Calciumphosphat geeignet, wobei diese Feststoffe gegebenenfalls zusätzlich mit Graphit vermischt sein können. Bei Verwendung von ZnS als Basisfeststoff im Gemisch mit einem der anderen obigen Feststoffe liegt das Verhältnis von ZnS zum anderen Feststoff im allgemeinen bei etwa 2:1. Die obigen Siliconpasten weisen bei Verwendung in Stoß- und Schwingungsdämpfern auch bei

-4-

Dauerbelastung bei etwa 20 bis 150°C einen etwa konstanten (linearen) Dämpfkraftverlauf auf.

Wenn ein Polyglycol als Basismaterial für die Flüssigphase verwendet wird, beträgt die Viskosität des Polyglycols vorzugsweise wenigstens 2o $mm^2$/s bei 5o°C, insbesondere 2o bis 2oo $mm^2$/s bei 5o°C. Es werden bevorzugt Polyglycoläther und/oder -ester verwendet, die wasserunlöslich oder nur in sehr geringem Maße wasserlöslich sind. Bei Verwendung mittelviskoser Polyglycoläther bzw. Polyglycoläthergemische beträgt die Viskosität ca. 7o bis 9o $mm^2$/s, insbesondere ca. 8o $mm^2$/s bei 5o°C. Bei der Verwendung hochviskoser Polyglycoläther bzw. Polyalkylenglycoläther beträgt die Viskosität ca. 17o bis 2oo $mm^2$/s, insbesondere 18o $mm^2$/s bei 5o°C. Ein bevorzugt verwendeter Polyalkylenglycoläther ist zum Beispiel der Polyglycoläther LB 18oo (Unioncarbide). Die erfindungsgemäss verwendeten Polyglycole besitzen einen Stockpunkt zwischen ca. -5o°C und 0°C, insbesondere zwischen -4o°C und -1o°C, und weisen ein relatives mittleres Molukulargewicht von ca. 7oo bis 2o ooo, insbesondere ca. 1 1oo bis 3 8oo auf. Besonders bevorzugt sind Polyglycole mit einem mittleren Molukulargewicht von ca. 1 1oo bis 2 3oo.

Es können aber auch hydrophile Polyäthylen-, Polypropylen- und Polybuthylenglycole und Gemische davon, als auch verzweigte Polyglycole und Polyglycole, die sich vom Glyzerin ableiten, eingesetzt werden,

Geeignete Polyglycoläther sind zum Beispiel die Polyäthylenglycolmonoäthyläther, -propyläther, -butyläther und -pentyläther, die Polypropylenglycolmonomethyläther, -äthyläther, -propyläther, -butyläther und -pentyläther und die Polybutylen-glycolmonomethyl- äther, -äthyläther, -propyläther, -butyläther, -pentyläther und -hexyläther und die Gemische davon.

Weiterhin sind auch die Monoester der Polyglycole einsetzbar, insbesondere die Monoester und Diester der Stearin-, Öl- und Laurinsäure der obigen Polyglycole.

Als Flüssigphase kann auch ein gesättigter, aliphatischer Ester, zum Beispiel der Ester eines gesättigten, aliphatischen einwertigen oder mehrwertigen $C_5$-$C_{12}$-Alkohols mit gesättigten aliphatischen $C_5$-$C_{12}$-Monocarbonsäuren eingesetzt werden. Besonders gevorzugt sind die Di- und Triester gesättigter aliphatischer Carbonsäureester. Bei den aromatischen Diestern sind die Ester aus aliphatischen, gesättigten ein- oder mehrwertigen $C_5$-$C_{12}$-Alkoholen mit Phthal-, Terphthal- und Isophthalsäure geeignet. Bei den aromatischen Triestern sind die Ester aus den aliphatischen, gesättigten ein- oder mehrwertigen $C_5$-$C_{12}$-Alkoholen mit Benzoltricarbonsäure einsetzbar. Besonders geeignet haben sich zum Beispiel die folgenden Ester erwiesen: Ester des Pentaerythrits, des Trimethylolpropans und des Trimethylpropanols mit einfachen bzw. verzweigten $C_5$-$C_{12}$-Carbonsäuren, die Ester der Adipinsäure, wie Adipinsäure-octyldecylester und deren Derivate, die Ester der Glutar- und/oder Pimelinsäure, die Ester der Phthalsäure, wie Diäthylhexylphthalat, Dioctylphthalat, Diisotridecylphthalat, Didecylphthalat, Ester der Trimellitsäure, Trimesinsäure und/oder Hemimellitsäure, zum Beispiel Tridecyl- und Trioctylester der Trimellitsäure.

Die Flüssigphase ist insbesodere mit graphitfreiem Feststoff versetzt. Die Feststoffe liegen in einer Menge von 2o bis 8o Gew.-%, vorzugsweise 3o bis 7o Gew.-%, bezogen auf das Gesamtgewicht des Dämpfmediums, vor. Bei einer Füllstoffmenge von weniger als 2o Gew.-% wird das Dämpfmedium zu dünnflüssig, so dass es kaum als wirksames Dämpfmedium einsetzbar ist. Bei der Verwendung von mehr als 8o Gew.% Füllstoffen entsteht eine Masse, die bereits so fest ist, dass die Fliessfähigkeit beeinträchtigt ist. Der bevorzugte Bereich der Feststoffzusätze liegt bei etwa 3o bis 6o Gew.-%, bezogen auf das Gesamtgewicht des Dämpfmediums.

Als Feststoffe sind feinverteilte Feststoffe geeignet, die sich günstig auf die Strukturviskosität des Dämpfmediums auswirken, wie Aluminiumoxid, Aluminiumhydroxid, Aluminiumcarbonat, Aluminiumphosphat, Aluminiumpolyphosphat, Aluminiumsilicat, Kryolith, Bariumsulfat, Calciumcarbonat, Magnesiumoxid, Magnesiumcarbonat, Magnesiumsilicat, Magnesiumaluminiumsilicat, Magnesiumstearat, Lithiumstearat, Molybdänsulfid, Siliciumdioxid, Sillimanit, Titandioxid, Zinksulfid, Zinkpyrophosphat, Talkum, Kaolin und/oder Polytetrafluoräthylen. Ein besonders geeigneter Feststoff ist ZnS, gegebenenfalls in Kombination mit $AlPO_4$, $Al_5(P_3O_{10})_3$ oder $CaF_2$.

Die hellen Feststoffe weisen eine Teilchengröße von 80 % höchstens 10 µm auf. Der bevorzugte Teilchengrößenbereich der Feststoffe liegt bei 80 % < 5 µm, insbesondere 80 % < 3 µm. Die feine Verteilung der Feststoffteilchen ist ein wesentliches Merkmal der erfindungsgemäßen Paste, da sie neben den anderen Faktoren zur kolloidalen Stabilität der Paste beiträgt.

- 8 -

Die vorteilhafte Verwendung der hellen Füllstoffe wird nachfolgend anhand der wichtigsten Füllstoffe näher erläutert:

$ZnS$ und $CaF_2$ besitzen eine gute Schmierfähigkeit und gute Temperaturstabilität, so dass auch das damit hergestellte erfindungsgemässe Dämpfmedium eine entsprechend gute Schmierfähigkeit und gute Temperaturstabilität aufweist. Kaolin besitzt sehr gute Verdickungseigenschaften, so dass der Gesamtanteil an Feststoff verringert werden kann und mit dem Dämpfmedium trotzdem eine hohe Energieumwandlung erreicht werden kann. Calciumcarbonat als Füllstoff ist sehr gut dispergierbar, und dadurch wird die Verarbeitbarkeit des Dämpfmediums verbessert.

Die Verwendung von Aluminiumoxid erhöht die Temperaturstabilität des Dämpfmediums. Durch den Einsatz von Zinksulfid als Feststoff kann die Druckbeständigkeit des erfindungsgemässen Dämpfmediums erhöht werden, und ausserdem wird dadurch die Dispergierbarkeit der Feststoffe verbessert. Dies ist insbesondere dann wichtig, wenn ein Feststoffgemisch verwendet wird.

Bariumsulfat ist ein sehr billiger und völlig inerter Rohstoff und daher besonders für die Herstellung von gummifreundlichen Dämpfmedien geeignet. Molybdänsulfid wird insbesondere als Zusatzstoff verwendet, wenn die Schmierfähigkeit des Dämpfmediums und ggf. die Dispergierbarkeit der Feststoffe verbessert werden soll. Bereits kleine Mengen an Molybdänsulfid verbessern die Schmierfähigkeit des Dämpfmediums wirksam. Molybdänsulfid wird insbesondere in Kombination mit Aluminiumoxid, CaF, ZnS, Kryolith oder Graphit verwendet.

Titanoxid wird insbesondere dann verwendet, wenn eine hohe Aufhellung des Dämpfmediums und ein inertes Verhalten gegenüber Gummiteilen gewünscht wird. Die Reinheit des Titandioxids sollte vorzugsweise wenigstens 99 % betragen.

Die erfindungsgemäßen pastenartigen Dämpfmedien besitzen eine Viskosität von etwa 100000 bis 4 x 10$^6$ mPa s, insbesondere von etwa 150000 bis 3 x 10$^6$ mPa s bei 18°C.

Nach einer Ausgestaltung der Erfindung können die Feststoffe auch oberflächenbehandelt sein. Ein Teil der verwendeten Feststoffe wird vorzugsweise in silanisierter Form verwendet.

Die hellen Feststoffe können teilweise auch durch natürlichen oder Elektro-Graphit ersetzt sein, wobei die Teilchengröße insbesondere 80% kleiner als 10 µm, insbesondere 80% kleiner als 3 µm ist. Die hellen Feststoffe können bis zu 50, insbesondere 40 Gew.-%, durch Graphit ersetzt sein. Das Feststoffgemisch enthält vorzugsweise einen Anteil von 5 bis 35 Gew.-% Graphit, wenn Graphit als Feststoff mitverwendet wird.

Die Netzmittel bzw. Mittel zur Erhöhung der Grenzflächenaktivität werden insbesondere zu 0,5-2 Gew.-%, bezogen auf das Gesamtgewicht des Dämpfmediums, eingesetzt, wobei insbesondere Aminsalze der Ölsäure, Linolsäure, Palmitinsäure und/oder Stearinsäure eingesetzt werden. Besonders wirksame Netzmittel sind auch die Perfluoralkylgruppen enthaltenden organischen Verbindungen, zum Beispiel das fluorierte Alkylpolyoxyäthylenäthanol. Geeignete Netzmittel sind auch Talgfettsäurediamine, Kokosfettsäurediamine, Naphthalinsulfonate, Alkylarylsulfonate, insbesondere Alkylbenzolsulfonate, Fettalkoholpolyglycoläther und äthoxilierte Acetylenalkohole. Die Netzmittel haben die Aufgabe, die Benetzung der eingesetzten Feststoffe mit der Flüssigphase zu verbessern. Bei der Verwendung von Siliconöl als Flüssigphase ist die Verwendung eines Netzmittels im allgemeinen nicht nötig. Das schließt nicht aus, daß spezielle Netzmittel gegebenenfalls zusätzlich eingesetzt werden können, da eine generelle Unverträglichkeit mit Siliconölen nicht gegeben ist.

Zur Erhöhung der Strukturviskosität bzw. zur Stabilisierung der Strukturviskosität enthält das erfindungsgemäße Dämpfmedium vorzugsweise 1 bis 7, insbesondere 2 bis 4 Gew.-% Al- und/oder Mg-Silicate und/oder Siliciumdioxyd in feinverteilter Form. Besonders geeignet sind hochdisperse Kieselsäure, Asbest und Ca-und Na-Bentonite. Das Benthonit wird vorzugsweise in Anwesenheit eines Aktivators, wie Propylencarbonat, Aceton oder Acetonitril verarbeitet. Die Korngröße des eingesetzten Viskositätsstabilisators liegt bei höchstens 0,5 μm, insbesondere bei 0,1 μm. Bei Verwendung von Siliconöl als Flüssigphase und Siliciumdioxid als Feststoff oder einem der anderen Feststoffe ist der Zusatz eines Mittels zur Verbesserung der Strukturviskosität nicht nötig.

Zur Stabilisierung der Flüssigphase gegen Oxidationen bei erhöhten Temperaturen enthält das erfindungsgemäße Dämpfmedium, das Ester oder Glycole als Flüssigphase enthält, 0,1 bis 4, vorzugsweise 0,5 bis 3 Gew.-% eines Antioxidationsmittels, bezogen auf das Gesamtgewicht des Dämpfmediums. Geeignete Antioxidationsmittel sind z.B. Phenol- und Thiophenolverbindungen, wie sie in Ullmann's Enzyklopädie, 15. Band, Seiten 217 bis 220 beschrieben sind. Besonders geeignet sind z.B sterich gehinderte Amino- und Phenolderivate, z.B. Diphenylamin, Phenyl- -naphthylamin, Thiophenylamin, Alkylphenole, Di-tertiär-butyl-p-kresol oder Trimethyldiheterochinolin.

Bei der Verwendung von Carbonsäureestern als Flüssigphase kann es von Vorteil sein, einen polymeren Viskositätsverbesserer zur Verbesserung des Viskositätsindex und zur Einstellung der Viskosität der Flüssigkeit zuzusetzen. Hierbei handelt es sich um Polymerisate, die in den gesättigten, aliphatischen oder aromatischen Carbonsäureestern löslich, teilweise löslich oder wenigstens sehr gut verteilbar sind. Geeignete Viskositätsverbesserer für die erfindungsgemäßen Dämpfmedien sind z.B. Polyisobutylene, Polymethacrylate, Polybutadiene, Polybutene, Polypropylene, Polyäthylene und/oder Polystyrole.

Die obengenannten Viskositätsverbesserer werden vorzugsweise in einer Menge von 0,5 bis 5, insbesondere 0,5 bis 2 Gew.-%, bezogen auf das Gesamtgewicht des Dämpfmediums eingesetzt.

Bei der Verwendung von Polyglycolen oder Silikonölen als Flüssigphase ist die Verwendung eines Viskositätsverbesserers im allgemeinen nicht notwendig, da diese Verbindungen in entsprechenden Viskositätsbereichen zur Verfügung stehen. Es ist jedoch nicht ausgeschlossen, für besondere Anwendungsfälle auch bei der Verwendung dieser Verbindungen zusätzlich Viskositätsverbesserer einzusetzen. Auch in diesem Fall werden die Viskositätsverbesserer in einer Menge von etwa 0,5 bis 5, insbesondere 0,5 bis 2 Gew.-%, bezogen auf das Gesamtgewicht des Dämpfmediums verwendet.

Die erfindungsgemäßen Dämpfmediun werden dadurch hergestellt, daß man die Flüssigphase vorlegt und diese ggf. mit dem Netzmittel und gegebenenfalls dem Antioxidationsmittel vermischt. Danach wird das Mittel zur Stabilisierung der Strukturviskosität, wo es benötigt wird, bei 40 bis 100°C, vorzugsweise 60 bis 80°C, eingemischt, und zwar so lange, bis eine homogene Verteilung erreicht ist. Danach werden die hellen Feststoffe bzw. das Gemisch aus hellem Feststoff und Graphit in kleinen Anteilen hinzugegeben. Beim Vermischen der Füllstoffe wird die Temperatur vorzugsweise auf etwa 60 bis 80°C eingestellt. Das Verrühren bzw. Vermischen kann auch unter einem gleichzeitigen Vermahlen vorgenommen werden, falls die eingebrachten Feststoffe nicht fein genug verteilt sind. Das Verrühren bzw. Vermahlen des Dämpfmediums erfolgt vorzugsweise unter Vakuum, um das Einrühren von Luft in das Dämpfmedium zu verhindern. Geeignete Rührvorrichtungen sind z.B. wirksame Dispergiermaschinen und Knetmaschinen, wie Doppelkneter, Dreiwalzenmühlen und Planetmischer. Die Mischzeit beträgt je nach der Mischwirksamkeit des Rührers etwa 20 bis 120 min. Es wird eine homogene, lagerstabile Paste erhalten. Auch bei Lagerzeiten von mehreren Monaten kommt es nicht zum Absetzen der Feststoffe bzw. eines Feststoffs.

Die erfindungsgemäßen Dämpfmedien sind für hydraulisch wirkende Dämpfervorrichtungen geeignet, insbesondere als Medien für Motorlager, Raddämpfer, Pralldämpfer, Lenkungsdämpfer, Stoßdämpfer, Vorrichtungen für Schienenfahrzeuge und Flugzeuge, Schwingungsdämpfer aller Art, Sitzdämpfer und für die schwingungsfreie Lagerung von Maschinen.

Die Erfindung wird durch die folgenden Beispiele näher erläutert.

Beispiel 1

Es wurde ein homogenes Dämpfmedium hergestellt, in dem der Carbonsäureester mit dem Netzmittel und dem Antioxidationsmittel verrührt wurde. Anschließend wurde der Viskositätsstrukturstabilisator bei 60°C zugemischt, und nach einer Rührzeit von etwa 20 min wurden die Füllstoffe eingerührt. Die Zusammensetzung des Dämpfmediums ist in der folgenden Tabelle zusammengefaßt:

|  | Gew.-% |
|---|---|
| Trimethylpropan-adipinsäureoctyldecylester | 50 |
| Graphit (Teilchengröße unter 0,8 µm) (Füllstoff) | 16 |
| Zinksulfid (Füllstoff) | 30 |
| Fluoriertes Alkylpolyoxyäthylenäthanol (Netzmittel) | 1 |
| Amorphes Siliciumdioxid (Teilchengröße unter 0,1 µm) | 2 |
| Diphenylamin (Antioxidationsmittel) | 1 |

In einem weiteren Versuch wurde der obige Ester durch den Trimethyladipinsäuredidecylester ersetzt. Beide Pasten zeigten im Siebtest (DIN 51817) bei 24 h bei 100°C eine Ölabscheidung von weniger als 1 %.

Beispiel 2

Es wurde ein Dämpfmedium gemäß dem Verfahren nach
Beispiel 1 mit der folgenden Zusammensetzung hergestellt:

|  | Gew.-% |
|---|---|
| Polyglycolmonobutyläther (Viskosität 80 qmm/s bei 50° C) | 50 |
| Graphit (Teilchengröße < 3 μm) | 14 |
| ZnS | 32,5 |
| Alkylpolyoxyäthylenäthanol (fluoriert) (Netzmittel) | 0,5 |
| Phenyl-α-naphthylamin (Antioxidationsmittel) | 1 |
| Bentonit*) mit Propylencarbonat als Aktivator | 2 |

*) Gehalt an Propylencarbonat: 0,5 Gew.-%


Beispiel 3

Es wurde ein Dämpfmedium gemäß dem Verfahren nach Beispiel
1 mit der folgenden Zusammensetzung hergestellt:

|  | Gew.-% |
|---|---|
| Polyglycolmonobutyläther (Viskosität 80 qmm/s bei 50 ° C | 50 |
| Graphit (Teilchengröße < 3 μm) | 41,8 |
| Tetrafluoräthylen (Teilchengröße < 5 μm) | 4,7 |
| Fluoriertes Alkylalkoxylat (Netzmittel) | 0,5 |
| Bentonit*) mit Propylencarbonat als Aktivator | 2 |
| Trimethyl-diheterochinolin (Antioxidationsmittel) | 1 |

*) Gehalt an Propylencarbonat: 0,5 Gew.-%

0059936

14-

Beispiel 4

Es wurde ein erfindungsgemäßes Dämpfmedium gemäß dem Verfahren nach Beispiel 1 mit der folgenden Zusammensetzung hergestellt:

| | Gew.-% |
|---|---|
| Didecylazelat | 32,8 |
| Zinksulfid (Feststoff) Korngröße $< 2$ µm | 46 |
| Graphit Teilchengröße $< 3$ µm | 16,7 |
| Alkylpolyoxyäthylenäthanol (Netzmittel) | 0,3 |
| Di-tert.-butyl-p-kresol (Antioxidationsmittel) | 0,4 |
| Bentonit (Bentone) mit 20 % Propylencarbonat als Aktivator | 1,8 |
| Polymethacrylat (Viskositätsverbesserer) | 2 |

Beispiel 5

Es wurde eine homogene Paste hergestellt, indem ein Siliconöl einer bestimmten Viskosität vorgelegt wurde, in das dann die Feststoffe sorgfältig eingerührt bzw. eingeknetet wurden. Die Zusammensetzung des Dämpfmediums ist nachfolgend zusammengefaßt:

| | Gew.-% |
|---|---|
| Dimethylpolysiloxan (Viskosität 350 $m^2$/s) | 31,5 |
| ZnS (Teilchengröße $< 2$ µm) | 42,0 |
| $CaF_2$ (Teilchengröße $< 2$ µm) | 26,5 |
| Penetration (DIN 51804): | 260 bis 280 · 0,1 mm |

Ölabscheidung (DIN 51817

aber bei Erwärmung über 24 h auf 100°C): 0,2 Gew.-%

Beispiel 6

Nach dem in Beispiel 5 beschriebenen Verfahren wurde ein Dämpfmedium mit der folgenden Zusammensetzung hergestellt:

|  | Gew.-% |
|---|---|
| Dimethylpolysiloxan (Viskosität 350 m$^2$/s) | 36,0 |
| Graphit (Teilchengröße < 3 μm) | 14,0 |
| ZnS (Teilchengröße < 2 μm) | 50,0 |

Penetration (DIN 51804): 260 nis 280 · 0,1 mm

Ölabscheidung (DIN 51817⌐

aber bei Erwärmung über 24 h auf 100°C): 0,5 Gew.-%

Beispiel 7

Nach dem in Beispiel 5 beschriebenen Verfahren wurde ein Dämpfmedium mit der folgenden Zusammensetzung und den nachfolgend angegebenen Eigenschaften hergestellt:

|  | Gew.-% |
|---|---|
| Dimethylpolysiloxan (Viskosität 350 m$^2$/s) | 40,4 |
| ZnS (Teilchengröße < 2 μm) | 38,5 |
| Aluminiumphosphat (AlPO$_4$·2H$_2$O) mit hoher spezifischer Oberfläche | 21,1 |

Penetration (DIN 51804): 260 bis 280 · 0,1 mm

Ölabscheidung (DIN 51817

aber bei Erwärmung über 24 h auf 100°C): 0,2 Gew.-%

Anwendungsbeispiel

Das erfindungsgemäße Dämpfmedium (z.B. nach Beispiel 4) wurde in einen hydraulisch wirkenden Pralldämpfer eingefüllt, der aus zwei konzentrischen Rohren bestand, wobei das Innenrohr den Kolben und das Außenrohr den Zylinder bildete. Das Innenrohr enthält eine Stickstoff-Füllung, die durch einen Trennkolben von dem dahinter liegenden Kolbenboden abgehalten wird. Der Kolbenboden ist mit einer Bohrung versehen. Das Dämpfmedium befindet sich im Zylinderraum hinter dem Kolbenboden und dringt durch die Bohrung in das Innenrohr ein, wenn dieses beim Aufprall in das Außenrohr gedrückt wird. Das Dämpfmedium drückt dabei den Trennkolben zurück und komprimiert die eingeschlossene Gasfüllung. Die Federkraft des Gases sorgt nach Beendigung des Aufpralls für die Rückstellung der beiden Rohre in die Ausgangslage. In die Bohrung im Boden des Kolbens ragt ein Steuerstift hinein. Der Steuerstift besitzt eine kegelige Form, die jedoch in Stufen von etwa 1/10 mm erreicht wird. Je weiter der Stift in die Bohrung eindringt, um so geringer wird der Spalt, der dem Dämpfungsmedium zum Durchströmen zur Verfügung steht. Dadurch kann gegen Ende des Dämpferweges ein gezielter Kraftanstieg erreicht werden.

Bedingt durch die Viskosität des erfindungsgemäßen Dämpfmediums ist es möglich, die Toleranzen bei der Dämpfervorrichtung größer zu halten als dies bei üblichen Seriendämpfern mit Hydrauliköl der Fall ist. Das Dämpfmedium schäumt bei hohen Druckdifferenzen nicht auf und besitzt einen Flammpunkt von mehr als 300° C.

Der Pralldämpfer wurde an der Vorderfront eines Kraftfahrzeuges mit einem Gewicht von 475 kg befestigt.

Zur Bestimmung des Kompressionsweges war ein induktiver Wegaufnehmer fest am Fahrzeug befestigt und mit der Spitze des Pralldämpfers verbunden. Zusätzlich wurde am Fahrzeug ein Beschleunigungsaufnehmer angebracht, der die Fahrzeugverzögerung erfaßte. Es wurden mehrere Aufprallversuche unter folgenden Versuchsbedingungen durchgeführt:

Fahrzeugmasse 450 kg und Aufprallgeschwindigkeit 5,3 km/h

Fahrzeugmasse 475 kg und Aufprallgeschwindigkeit 7,9 km/h

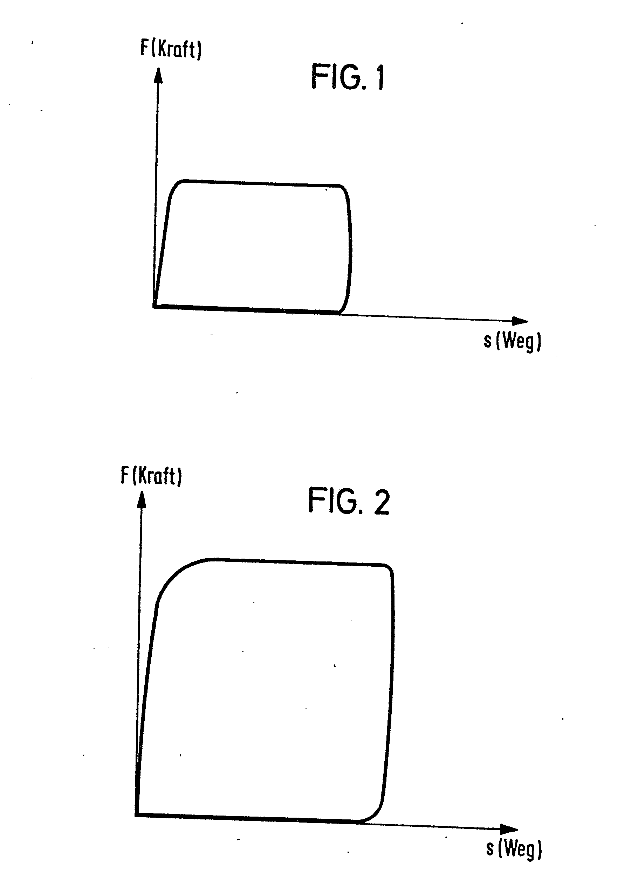

Das Kraft-Weg-Diagramm für die obigen Aufprallversuche zeigt eine nahezu rechtwinklige Form und damit ein optimales Dämpfungsverhalten. Die gesamte Bewegungsenergie des Fahrzeugs wird vom Dämpfer aufgenommen, und der zur Verfügung stehende Weg (Hub) wird optimal genutzt (vergl. Figur 1 und 2). Die Figur 1 zeigt das Kraft-Weg-Diagramm für den Aufprallversuch mit einer Last von 450 kg bei 5,3 km/h und die Figur 2 zeigt den Aufprallversuch mit einer Last von 475 kg bei 7,9 km/h.

Auch bei einer Aufprallgeschwindigkeit von 10 km/h kommt es zu keinem Durchschlagen des Dämpfers. Die Fahrzeugverzögerung (Fahrzeugmasse 500 kg) liegt bei 9,8 g und damit weit unterhalb der Verzögerung, die mit üblichen Pralldämpfern, die mit Hydraulikölen gefüllt sind, erreicht wird. Die Energieaufnahme ist bei dem mit dem erfindungsgemäßen Dämpfmedium gefüllten Pralldämpfer also wesentlich größer als bei den üblichen Pralldämpfern.

Während bei den üblichen Pralldämpfern, die mit Hydraulikölen gefüllt sind, nur ein Teil der Aufprallenergie umgewandelt wird und der verbleibende Rest wie eine Feder gespeichert wird, die das Fahrzeug dann anschließend zurückschleudert, wird bei den mit den erfindungsgemäßen Dämpfmedien gefüllten Pralldämpfern praktisch die gesamte kinetische Energie beim Aufprall abgebaut. Ein Rückprall des Fahrzeugs kommt nicht zustande.

3. März 1982

Sch 1912-DrK/ks

Schiedel GmbH & Co.
Lerchenstraße 9
D-8000 München 50

Pastenartiges Dämpfmedium,
Verfahren zu seiner Herstellung
und seine Verwendung

## Patentansprüche

1. Pastenartiges Dämpfmedium zur Dämpfung mechanischer und/oder akustischer Schwingungen auf Basis einer Flüssigphase und mindestens eines feinverteilten Feststoffes, d a d u r c h   g e k e n n z e i c h n e t ,

daß es etwa 20 bis etwa 80 Gew.-% Aluminiumoxid, -silicat, -hydroxid, -carbonat, -phosphat, -polyphosphat, Kryolith, Bariumsulfat, Calciumcarbonat, -hydroxid, -phosphat, -fluorid, Magnesiumoxid, -carbonat, -silicat, -aluminiumsilicat, -stearat, Lithiumstearat, Molybdänsulfid, Siliciumdioxid, Sillimanit, Titandioxid, Zinksulfid, Talk, Kaolin, Zinkpyrophosphat und/oder Polytetrafluoräthylen einer Teilchengröße von 80 % < 10 µm, bezogen auf das Gesamtgewicht des Dämpfmediums, und Silikonöl, Polyglycol oder einen temperaturbeständigen, gesättigten, aliphatischen oder aromatischen Carbonsäureester enthält.

2. Pastenartiges Dämpfmedium zur Dämpfung mechanischer und/oder akustischer Schwingungen auf Basis einer Flüssigphase und mindestens eines feinverteilten Feststoffes, dadurch gekennzeichnet, daß es etwa 20 bis 80 Gew.-%, bezogen auf das Gesamtgewicht des Dämpfmediums, eines Gemisches aus Aluminiumoxid, -hydroxid, -carbonat, -phosphat, -polyphosphat, -silicat, Kryolith, Bariumsulfat, Calciumcarbonat, -hydroxid, -phosphat, -fluorid, Magnesiumoxid, -carbonat, -silicat, aluminiumsilicat, -stearat, Lithiumstearat, Molybdänsulfid, Siliciumdioxid, Sillimanit, Titandioxid, Zinksulfid, Zinkpyrophosphat und/ oder Polytetrafluoräthylen einer Teilchengröße von 80 % < 10 µm und Graphit einer Teilchengröße von 80 % < 10 µm und Silikonöl, Polyglycol oder einen temperaturbeständigen, gesättigten, aliphatischen oder aromatischen Carbonsäureester enthält.

3. Dämpfmedium nach Anspruch 1 oder 2, dadurch gekennzeichnet, daß es zusätzlich etwa 0,1 bis 4 Gew.-% Netzmittel und/oder etwa 0,5 bis 10 Gew.-% feinverteilte Magnesiumsilicate, Aluminiumsilicate und/oder Kieselsäure als Strukturviskositätsstabilisatoren, bezogen jeweils auf das Gesamtgewicht des Dämpfmediums, enthält.

4. Dämpfmedium nach Anspruch 1 oder 2, dadurch gekennzeichnet, daß der Feststoff bzw. das Feststoffgemisch in einer Menge von 30 bis 70 Gew.-%, bezogen auf das Gesamtgewicht des Dämpfmediums, vorliegt.

5. Dämpfmedium nach Anspruch 1 oder 2, dadurch gekennzeichnet, daß die Teilchengröße der Feststoffe bei 80 % < 5 µm, insbesondere bei 80 % < 3 µm, liegt.

6. Dämpfmedium nach Anspruch 2, dadurch gekennzeichnet, daß das Feststoffgemisch höchstens 50 Gew.-% Graphit, insbesondere höchstens 40 Gew.-% Graphit, enthält.

7. Dämpfmedium nach Anspruch 1 oder 2, dadurch gekennzeichnet, daß es 0,5 bis 2 Gew.-% Netzmittel bzw. Mittel zur Erhöhung der Grenzflächenaktivität enthält, wobei das Netzmittel insbesondere ein Aminsalz der Ölsäure, Linolsäure, Palmitinsäure und/oder Stearinsäure, Talgfettsäurediamine, Kokosfettsäurediamine, Naphthalinsulfonate, Alkylarylsulfonate, Fettalkoholpolyglycoläther, äthoxylierte Acetylenalkohole, Perfluoralkylgruppen enthaltende Alkylverbindungen, fluorierter Alkylpolyoxyäthylenäthanol, Kaliumfluoralkylcarboxylat und/oder fluoriertes Alkylammoniumjodid ist.

8. Dämpfmedium nach Anspruch 1 oder 2, dadurch gekennzeichnet, daß es 1 bis 7 Gew.-%, insbesondere 2 bis 4 Gew.-%, des Strukturviskositätsstabilisators, bezogen auf die Gesamtmenge des Dämpfmediums, enthält.

9. Dämpfmedium nach Anspruch 1 oder 2, dadurch gekennzeichnet, daß es 0,1 bis 4 Gew.-%, insbesondere 0,5 bis 3 Gew.-%, bezogen auf das Gesamtgewicht des Dämpfmediums, Antioxidationsmittel für die Polyglycole oder Carbonsäureester enthält, wobei das Antioxidationsmittel insbesondere ein sterisch gehindertes Alkylphenol, Thiophenol oder Dialkylselenid, insbesondere Diphenylamin, Phenyl-α-naphthylamin, Methylen-4,4'-bis-(2,6-di-tertiär-butyl-phenol), Thiophenylamin, Di-tertiär-butyl-p-kresol oder Trimethyldiheterochinolin ist.

10. Dämpfmedium nach Anspruch 1 oder 2, dadurch gekennzeichnet, daß es 0,5 bis 5 Gew.-% eines polymeren Viskositätsverbesserers als zusätzliches Additiv, bezogen auf das Gesamtgewicht des Dämpfmediums, enthält, wobei der Viskositätsverbesserer insbesondere ein Polyisobutylen, Polymethacrylat, Polybuten, -butadien, Polyäthylen, Polypropylen und/oder Polystyrol ist.

11. Dämpfmedium nach Anspruch 1 oder 2, dadurch gekennzeichnet, daß der Strukturviskositätsstabilisator ein Ca-Betonit, Na-Betonit, Asbest und/oder hochdisperse Kieselsäure ist.

12. Dämpfmedium nach Anspruch 1 oder 2, dadurch gekennzeichnet, daß die Flüssigphase aus einem Siliconöl der Viskosität von 100 bis 2000, insbesondere 200 bis 1000 mm²/s bei 25°C, vorzugsweise aus Dimethylpolysilixan, Phenylmethylpolysiloxan und/oder fluoriertem Polysiloxan besteht.

13. Dämpfmedium nach Anspruch 1 oder 2, dadurch gekennzeichnet, daß die Flüssigphase aus Siliconöl und der Feststoff aus Zinksulfid, $CaF_2$, Aluminiumphosphat, Calciumphosphat und/oder Graphit besteht.

**0059936**

14. Verfahren zur Herstellung des Dämpfmediums nach Anspruch 1 oder 2, dadurch gekennzeichnet, daß man die Flüssigphase bei Temperaturen von 40°C bis 100°C, insbesondere 60°C bis 80°C, gegebenenfalls mit dem Netzmittel und gegebenenfalls mit dem Antioxidationsmittel vermischt, gegebenenfalls den Strukturviskositätsstabilisator zumischt und anquellen läßt und dann die Feststoff-Füllstoffe in kleinen Anteilen zumischt, bis man eine homogene Paste erhält.

15. Verwendung des Dämpfmediums nach einem der Ansprüche 1 bis 13 in Pralldämpfern, Raddämpfern, Lenkungsdämpfern, Sitzdämpfern, Motordämpern, Maschinenlagerungsdämpfern, Industriestoßdämpfern oder Industrieschwingungsdämpfern.

1/1

0059936

F(Kraft)

FIG. 1

s(Weg)

F(Kraft)

FIG. 2

s(Weg)

# EUROPÄISCHER RECHERCHENBERICHT

**0059936**
Nummer der Anmeldung

EP 82 10 1650

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | DE-A-2 814 366 (K. LOCHNER) <br><br> * Ansprüche 1-20; Seite 7, Absatz 2 - Seite 10, Absatz 2 * <br><br> --- | 1-9,11 -13,15 | C 10 M 7/00 <br> C 10 M 3/00 <br> F 16 F 9/30 |
| X,Y | DE-A-2 647 697 (K. LOCHNER) <br><br> * Ansprüche 1-3, 6-38 * & FR - A - 2 330 762 <br><br> --- | 1-4,6- 9,11- 13,15 | |
| X,Y | DE-A-2 549 672 (K. LOCHNER) <br><br> * Ansprüche 1-12 * <br><br> --- | 1-9,11 ,13,15 | |
| Y | DE-A-1 918 196 (LICENTIA PATENT-VERWALTUNGS GmbH) <br><br> * Ansprüche 1-6 * <br><br> --- | 1,2,4, 12,13, 15 | |

**RECHERCHIERTE SACHGEBIETE (Int. Cl. ³)**

| Kategorie | Kennzeichnung des Dokuments | Betrifft Anspruch | Sachgebiete |
|---|---|---|---|
| A | FR-A-2 168 526 (A/S RAUFOSS AMMUNISJONSFABRIKKER) <br> * Ansprüche 1,6-10 * & DE - A - 2 302 657 & GB - A - 1 424 772 <br><br> ----- | 1-3,12 ,15 | C 10 M <br> F 16 F |

Der vorliegende Recherchenbericht wurde für alle Patentansprüche erstellt.

| Recherchenort | Abschlußdatum der Recherche | Prüfer |
|---|---|---|
| DEN HAAG | 14-06-1982 | ROTSAERT L.D.C. |